# EUROPÄISCHE PATENTSCHRIFT

(11) **EP 2 419 259 B1**
(45) Veröffentlichungstag und Bekanntmachung des Hinweises auf die Patenterteilung: **08.10.2014**
(21) Anmeldenummer: 10726001.0
(22) Anmeldetag: 14.04.2010
(51) Int. Cl.: B29C 70/00, B29C 70/08, B29C 70/38, B29C 70/40, B29C 70/44, B29C 43/18

(54) **VERFAHREN UND VORRICHTUNG ZUR HERSTELLUNG VON KUNSTSTOFF ENTHALTENDEN BAUTEILEN**
METHOD AND DEVICE FOR PRODUCING COMPONENTS CONTAINING PLASTIC
PROCÉDÉ ET DISPOSITIF POUR FABRIQUER DES ÉLÉMENTS DE CONSTRUCTION CONTENANT DE LA MATIÈRE PLASTIQUE

(30) Priorität: 15.04.2009 DE 102009017112
(43) Veröffentlichungstag der Anmeldung: 22.02.2012
(73) Patentinhaber: Fraunhofer-Gesellschaft zur Förderung der angewandten Forschung e.V., 80686 München (DE)
(72) Erfinder: DUBRATZ, Markus, 52146 Würselen (DE)
(74) Vertreter: Naeven, Ralf
(86) Internationale Anmeldenummer: PCT/EP2010/054881
(87) Internationale Veröffentlichungsnummer: WO 2010/119058

(56) Entgegenhaltungen:
- EP-A2- 0 247 359
- EP-A2- 0 412 346
- WO-A1-2006/016393
- FR-A1- 2 912 077

## Beschreibung

Die Erfindung betrifft ein Verfahren zur Herstellung von Kunststoff enthaltenden Bauteilen gemäß dem Oberbegriff des Anspruchs 1 sowie eine Vorrichtung gemäß dem Oberbegriff des Anspruchs 7.

Kunststoffbauteile können durch schichtweises Ablegen von Polymerbändern erzielt werden. Diese Herstellungsweise eignet sich insbesondere zur Herstellung von Bauteilen aus Faserverbundkunststoffen. So haben sich z. B. in der Luft- und Raumfahrttechnik Hochleistungsfaserverbundbauteile etabliert, die überall dort, wo geringes Gewicht bei gleichzeitig hoher mechanischer Belastbarkeit gefordert wird, besonders geeignet sind. Diese Herstellungstechnologie wird derzeit jedoch wegen der hohen Fertigungskosten eher in geringem Umfange genutzt. Es ist daher das Bestreben, derartige Fertigungsmethoden möglichst automatisierbar zu gestalten. Bei der Herstellung werden die Polymerbänder auf eine Form angedrückt, automatisiert abgelegt und nach der Ablage geschnitten. Zur Herstellung von flächigen Bauteilen werden mehrere Polymerbänder nebeneinander Stoß an Stoß abgelegt. Die Dicke des Bauteils wird durch Ablegen mehrerer Lagen übereinander erzeugt. Auf diese Weise können auch lokale Bauteilverstärkungen erreicht werden, z.B. durch Ausbildung einer Rippenstruktur.

Die automatisierte Herstellung von Verbundbauteilen mit einer unebenen Oberfläche durch Ablage von Polymerbändern ist insbesondere durch die Problematik der Erstlagenfixierung stark gehemmt. Die Form der Bauteile wird in der Regel durch ein metallisches Formgebungswerkzeug vorgegeben. Da die Polymerbänder insbesondere bei stark gekrümmten Bauteilgeometrien für die Fixierung der ersten Lage auf dem Formgebungswerkzeug nicht hinreichend anhaften, muss für die Fixierung der ersten flächig nebeneinander abgelegten Polymerbänder sowie gegebenenfalls darüber hinaus auch während der Ablage von weiteren Schichten für die Anhaftung des herzustellenden Bauteils an der Werkzeugoberfläche gesorgt werden. Der Anhaftmechanismus muss dabei automatisierbar und reproduzierbar sein.

Insbesondere bei faserverstärkten Polymerbändern treten in Abhängigkeit vom Biegeradius an der Werkzeugoberfläche unterschiedlich hohe Eigenspannungen in Faserrichtung auf. Die Anhaftkraft für die Polymerbänder muss aber in jedem Punkt der Werkzeugoberfläche so groß sein, dass ein selbstständiges Lösen der Polymerbänder von der Werkzeugoberfläche nicht möglich ist. Zu den geometrisch eingebrachten Eigenspannungen der Polymerbänder kommen gegebenenfalls noch Eigenspannungen hinzu, die durch den Herstellungsprozess selber eingebracht werden und ebenfalls ein Ablösen der abgelegten Polymerbändern hervorrufen können. Zur Lösung der Anhaftung der Erstlage sind diverse Ansätze verfolgt worden.

Ein Verfahren zum Ablegen von Thermoplastbändern ist in der DE 101 29 514 A1 offenbart. Dabei ist es vorgesehen, eine Werkzeugplattform auf einen Bereich von 50° C unterhalb bis 40° C oberhalb der Kristallisationstemperatur des zu verarbeitenden Thermoplasts zu temperieren und hierdurch ein Anhaften der abgelegten Thermoplastbänder zu erreichen. Die Anhaftung soll sich beim Abkühlen der Werkzeugplattform reduzieren, wodurch ein leichtes Ablösen der abgelegten Thermoplastbänder ermöglicht werden soll. Je nach gegebener Krümmung der Bauteiloberfläche reicht jedoch die gemäß dem vorgenannten Stand der Technik vorgeschlagene Erwärmung der Werkzeugoberfläche vielfach nicht aus, um dauerhaft sowohl die Erstlage als auch im weiteren Prozessverlauf das zum Teil bereits fertig erstellte Bauteil vollständig am Formgebungswerkzeug festzuhalten. Die Ablösekräfte, die durch die Eigenspannungen des Bauteils hervorgerufen werden, können ohne weiteres größer als die Anhaftkräfte aufgrund der erhitzten Werkzeugoberfläche sein.

In der DE 101 29 514 A1 ist zudem als vorhergehender Stand der Technik offenbart, ein doppelseitiges Klebeband einzusetzen, welches auf die Werkzeugoberfläche geklebt als Fixierung für die Polymerbänder dienen soll. Die Anhaftkraft des Klebebandes reicht aus, um auch auf Krümmungen und in Mulden der Werkzeugoberfläche die Polymerbänder zu fixieren. Nachteilig ist, dass bei nicht abwickelbaren Werkzeugformen das Klebeband über die Oberfläche des Werkzeuges drapiert werden muss. Dabei entstehen gegebenenfalls Überlappungen oder Fehlstellen, die für eine maßhaltige Bauteilerzeugung ausgeglichen werden müssen. Außerdem sind die Anhaftkräfte des Klebebandes sehr stark, was die Entformung des Bauteils - insbesondere bei zunehmender Bauteil- und Werkzeugkomplexität - erschwert. Schließlich sind nach der Entformung des Bauteils Rückstände des Klebebandes von dem erstellten Bauteil und der Werkzeugform in einem aufwendigen Prozessschritt zu entfernen, was generell die Automatisierung des Herstellungsverfahrens erschwert.

Des Weiteren ist es aus der vorgenannten Druckschrift bekannt, die in der Erstlage aufgelegten Polymerbänder auf der Werkzeugoberfläche durch Ansaugen mittels Unterdruck zu fixieren. Dabei besteht das Werkzeug aus einer porösen Oberflächenstruktur, durch die ein Luftstrom erzeugt und so ein Unterdruck realisiert werden kann. Durch das Vakuum werden die Polymerbänder auf die Werkzeugform gezogen und fixiert. Nachteilig dabei ist, dass die Werkzeugform in Teilen oder als Ganzes mit Unterdruck versehen werden muss und daher zu Beginn der Polymerbänderablage der Anteil der nicht mit Bändern belegten Werkzeugoberfläche groß ist. Hieraus ergibt sich ein hoher Leckagestrom der zu Beginn der Ablage der Polymerbänder zur Erzeugung eines nur sehr geringen Unterdrucks führt. Dementsprechend ist die Anhaftkraft am Anfang der Bänderablage auf der Werkzeugoberfläche sehr klein. Somit kann durch dieses Verfahren nur eine ungleichmäßig große Anhaftkraft während des Ablegens der Bänder realisiert werden.

Aus der DE 100 12 378 A1 ist ein Verfahren bekannt, bei dem die Anhaftung faserverstärkter Thermoplastbänder auf einer Werkzeugoberfläche mittels Aufbau eines elektrostatischen Feldes realisiert wird. Hierfür wird die Werkzeugoberfläche mit einer Isolierschicht beschichtet und eine Gleichspannung zwischen dem Werkzeug und den in dem abzulegenden Thermoplastband befindlichen Kohlenstofffasern erzeugt. Das hierdurch gegebene elektrostatische Feld begünstigt das Anhaften des Thermoplastbandes auf der Werkzeugoberfläche. Bei diesem System sind die enormen Aufwendungen zur Herstellung des elektrostatischen Feldes nachteilig. Insbesondere bei der Ablage von mehreren Polymerbändern in Verbindung mit einer aufzubringenden Andruckkraft ist sicherzustellen, dass eine hinreichend durchschlagsfeste Isolierschicht eingesetzt wird. Bei kleinen Beschädigungen der Isolierschicht kann es zu Durchschlägen kommen, die zu einem Funktionsausfall führen können.

Aus der FR 2912077 A1 ist ein Verfahren der eingangs genannten Art bekannt, bei dem Polymerbänder auf ein folienartiges Ablageelement, welches mittels Unterdruck an einem Formgebungselement fixiert wird, abgelegt werden. Dieses Verfahren eignet sich jedoch grundsätzlich nur für abwickelbare Anformflächen. Andere Flächenformen würden zur Faltenbildung beim folienartigen Ablageelement führen müssen.

Aus der WO 2006/016393 A1 ist eine dünne Folie aus einem dehnbaren Plastikmaterial zu Verpackungszwecken bekannt, welche mittels Rollen aufgebrachte verstärkende Streifen aufweist.

Aus der EP 0247359 A2 ist ein Verfahren zur Herstellung eines Materials für Fahrzeuge bekannt. Dabei wird mittels Unterdruck eine Oberflächenlage aus Kunststoff in eine Form hineingeformt und mittels eines Klebestoffes eine verstärkende Fasermatte auf die Oberflächenlage fixiert. Anschließend wird eine Polymerzusammensetzung aufgebracht, welche die Fasermatte durchdringt, um anschließend ein gepresstes Objekt aus der Form zu entfernen.

Aus der EP 0412346 A2 ist eine Vorrichtung der eingangs genannten Art bekannt, welche zur Produktion harzreicher Oberflächenschichten auf thermoplastischem Verbundmaterial dient. Dabei wird eine Platte des Verbundmaterials nach vorheriger Erwärmung in einem pressenden Formwerkzeug verformt und mit der harzreichen Schicht belegt. Nicht offenbart ist, die verformte Platte mit Polymerbändern zu belegen.

Es ist nun Aufgabe der Erfindung, ein Verfahren sowie eine Vorrichtung der eingangs genannten Art zur Verfügung zu stellen, welche unter Vermeidung der vorgenannten Nachteile des Standes der Technik eine zuverlässige Fixierung der Erstlage von Polymerbändern gewährleisten.

Diese Aufgabe wird bei einem Verfahren der eingangs genannten Art durch die kennzeichnenden Merkmale des Anspruchs 1 gelöst, bei einer Vorrichtung der vorgenannten Art durch das kennzeichnende Merkmal des Anspruchs 7.

Vorteilhafte Ausführungsformen des erfindungsgemäßen Verfahrens sowie der Vorrichtung sind durch die Unteransprüche gegeben.

Die Verwendung eines im Bauteil verbleibenden Ablageelements aus einem Polymermaterial ermöglicht es auch bei unterschiedlichen Ablageelement-Formen eine zuverlässige Anhaftung der Polymerbänder auf dem Ablageelement zu gewährleisten. Die Anhaftung wird dabei auf jeweils einfache aber effektive Weise bewirkt. Ablöseprozesse von einem Werkzeug sind nicht erforderlich oder einfach zu bewerkstelligen. Die Polymerbänder bilden zunächst eine erste Lage, die zusammen mit dem Ablageelement bereits ein fertiges Bauteil darstellen kann. Zumeist werden jedoch weitere Lagen aufgebracht, die aus demselben Polymermaterial wie die Erstlage oder aus einem anderen Polymermaterial bestehen können.

Bei Bauteilen, bei denen das Ablageelement nach Fertigstellung eine Funktionsfläche bildet, können durch geeignete Wahl des Materials des Ablageelements zudem die gewünschten Eigenschaften der Bauteiloberfläche beeinflusst und gegebenenfalls nachträglich optimiert werden.

Einstellbare Eigenschaften sind z. B. optische und haptische Oberflächeneigenschaften, der Schutz der erstellten Struktur vor Umgebungs- oder Umwelteinflüssen, die nachträgliche Aufbringung einer Lackschicht oder deren Vorbereitung als optische Maßnahme oder zum Schutz der Struktur sowie die Magnetisierbarkeit. Des Weiteren wäre es denkbar, nach dem Ablösen des Bauteils vom Formgebungswerkzeug die dann freie Oberfläche an der Unterseite des Ablageelements wiederum mit Polymerbändern zu belegen. Hierzu kann das halbseitig belegte Bauteil auf eine geeignete Unterlage aufgelegt und z.B. mit Unterdruck fixiert oder in eine Halterung eingespannt werden. Das vorzugsweise thermoplastische Ablageelement kann z.B. folienartig oder plattenförmig sein und vor dem Ablegen der Erstlage eine flexible oder starre Struktur aufweisen.

Bei Verwendung eines ursprünglich folienartigen oder plattenförmigen Ablageelements wird dieses zunächst an eine Formgebungsfläche eines Formgebungswerkzeugs angeformt. Insbesondere bei Formgebungsflächen, die in zwei Dimensionen gekrümmt sind, erfolgt die Anformung bei folienartigen oder plattenförmigen Ablageelementen durch Erwärmung , z. B. mittels im Formgebungswerkzeug angeordneter Heizelemente, sowie einem Pressvorgang mittels eines Presswerkzeuges, das eine zur Formgebungsfläche komplementäre Pressfläche aufweist. Das Presswerkzeug kann ebenfalls Heizelemente zur Erwärmung des Ablageelements abweisen. Auf diese Weise kann erreicht werden, dass das Ablageelement im gesamten für die Fertigstellung des Bauteils benötigten Teil eine definierte, z. B. gleichmäßige, Schichtdicke aufweist. Alternativ zu den beispielsweise elektrisch betriebenen Heizelementen können zur Wärmezufuhr beim Drapieren des Ablageelements auf das Formgebungswerkzeug z. B. Laserenergie, Heizgas, Infrarot- oder UV-Strahlung oder eine offene Flamme verwendet werden.

Bei Verwendung eines plattenförmigen Ablageelements aus einem thermoplastischen Material kann die Formgebung auch mittels des bekannten Sheet-Moulding Compound Verfahrens (SMC-Verfahren) erfolgen.

Nach dem Pressvorgang wird das Presswerkzeug entfernt. Weist das Ablageelement eine geeignete Rigidität auf, kann es zum Aufbringen der Polymerbänder in eine Haltevorrichtung eingespannt werden.

Das Ablageelement kann aber auch für die Erstlagenfixierung und ggf. auch für das Aufbringen weiterer Schichten auf dem Formgebungswerkzeug verbleiben und auf diesem z. B. mittels Unterdruck fixiert werden. Dies ist insbesondere vorteilhaft bei folienartigen Ablageelementen mit geringen Dicken von z.B. 0,2 - 0,4 µm, die auch nach der Anformung noch eine Flexibilität aufweisen können. Aber auch bei an sich bereits formstabilen Ablageelementen mit einer größeren Dicke von z.B. 1 mm oder mehr kann ein Ansaugen sinnvoll sein, z.B. zur Vermeidung von Querbewegungen des gesamten Ablageelements während der Polymerbandfixierung.

Im Falle der Fixierung mittels Unterdrucks weist das Formgebungswerkzeug einen Unterdruckraum auf, und die Formgebungsfläche ist zumindest bereichsweise als luftdurchlässige Ansaugfläche ausgebildet. Die Ansaugfläche kann zum Beispiel Perforationen aufweisen und eine Unterdruckkammer begrenzen. Alternativ kann das Formgebungswerkzeug auch durch poröses Material gebildet sein, das abgesehen von der Formgebungsfläche und einer Absaugöffnung allseitig abgedichtet ist, z.B. durch Wandelemente. Der Unterdruckraum ist in diesem Fall zumindest im Wesentlichen durch das poröse Material gefüllt.

Da somit das Ablageelement die komplette oder zumindest nahezu die gesamte Ansaugfläche abdeckt, kann ohne oder nahezu ohne Leckagestrom gearbeitet werden, so dass die Fixierung des Ablageelements entsprechend stabil ist und so auch größeren Eigenspannungen der später abgelegten Polymerbänder widerstehen kann. Auf eine dem Formwerkzeug abgewandte Ablagefläche des so fixierten Ablageelements können die Polymerbänder in der Erstlage und in weiteren Lagen abgelegt werden.

Nach dem Aufbringen der Polymerbänder wird der Unterdruck abgebaut und das Bauteil kann vom Formgebungswerkzeug abgehoben werden, wobei im Idealfall keinerlei Rückstände auf dem Formgebungswerkzeug zurückbleiben. Gegebenenfalls beschränkt sich die Nacharbeitung lediglich auf die Randbereiche des Bauteils.

Das Ablageelement kann unabhängig von seiner Form aus einem faserverstärkten oder nicht faserverstärkten Polymermaterial bestehen.

Die abzulegenden Polymerbänder weisen bevorzugt eine Faserverstärkung auf. Das erfindungsgemäße Verfahren kann aber auch mit Polymerbändern ohne Faserverstärkung durchgeführt werden.

Weiter bevorzugt ist das Ablegen thermoplastischer Polymerbänder. Zum Ablegen der Erstlage kann dabei vorgesehen werden, sowohl das Ablageelement als auch das jeweilige Polymerband lokal unmittelbar vor der Kontaktbildung zu erhitzen, gegebenenfalls auch aufzuschmelzen, und anschließend das Polymerband, z. B. mit mindestens einer Andruckrolle, auf das Ablageelement aufzupressen. Genauso wird mit der zweiten Lage verfahren, wobei dann lokal das jeweilige abzulegende Polymerband und die Erstlage lokal aufgeschmolzen und das Polymerband auf die Erstlage aufgepresst wird. In entsprechender Weise werden die Folgelagen aufgebracht. Das lokale Erhitzen des Ablageelements sowie des Polymerbandes bei dessen Ablage kann z.B. mittels Laserstrahlung, Heißgas, Infrarot- oder Ultraviolettstrahlung oder Mikrowellen erfolgen.

Bei der Ablage duroplastischer Polymerbändern kann auf ein lokales Aufschmelzen verzichtet werden. Duroplastische Polymerbänder haften bei entsprechend realisierter Haftfähigkeit durch ihre Klebeeigenschaft auf dem Ablageelement.

Bauteile, die in der beschriebenen Weise aus thermoplastischen Polymerbändern hergestellt wurden, können nach dem Ablegen anschließend direkt einer Nachbearbeitung, z. B. im Randbereich, unterzogen werden. Bauteile aus duroplastischen Polymerbänden hingegen müssen zunächst unter Wärme in einem zwischengelagerten Prozessschritt ausgehärtet werden.

Im Folgenden werden bevorzugte Ausführungsformen des erfindungsgemäßen Verfahrens sowie der erfindungsgemäßen Vorrichtung anhand von Figuren dargestellt. Es zeigt schematisch:
- Fig. 1: ein Formgebungswerkzeug mit einem komplementären Presswerkzeug und Vakuumpumpe,
- Fig. 2: die Werkzeugkombination gemäß Fig. 1 mit Ablagefolie,
- Fig. 3: die Kombination gemäß Fig. 2 mit geschlossener Werkzeugkombination,
- Fig. 4: das Formgebungswerkzeug mit aufliegendem teilfertigem Bauteil und
- Fig. 5: das vom Formgebungswerkzeug abgehobene Bauteil.

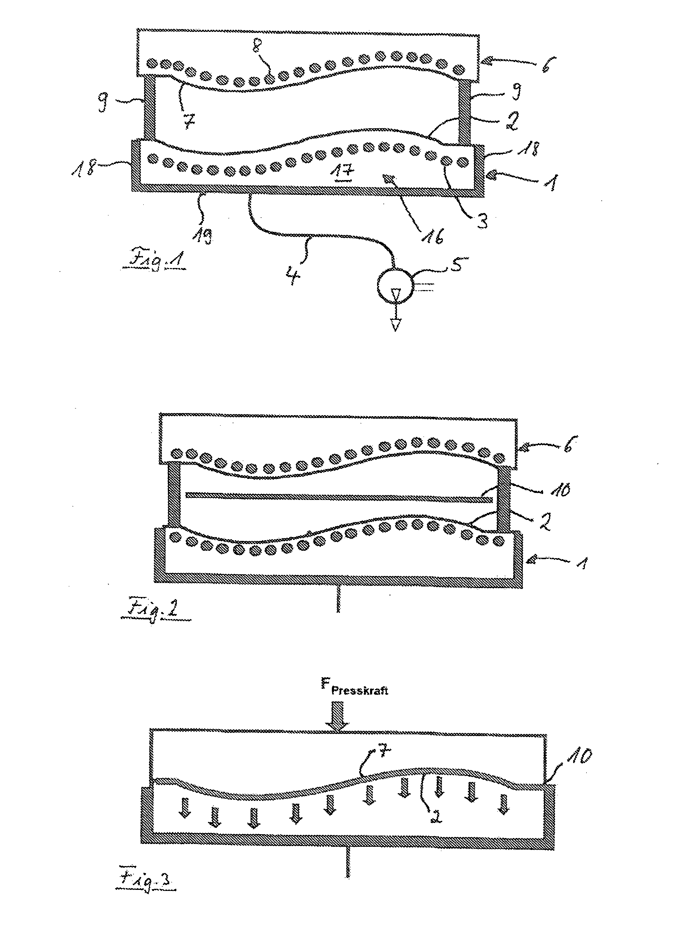

Figur 1 zeigt ein Formgebungswerkzeug 1 mit einer geschwungenen Formgebungsfläche 2 schematisch in einer Seitenansicht. Im Inneren des Formgebungswerkzeugs 1 befinden sich Heizelemente 3. Das Formgebungswerkzeug 1 umschließt einen Unterdruckraum 16, der mit einem porösen Füllmaterial 17 gefüllt und über eine Vakuumleitung 4 mit einer Vakuumpumpe 5 verbunden ist. Zu den Seiten ist das Formgebungswerkzeug 1 mit Wänden 18 und der Formgebungsfläche gegenüberliegend mit einem Bodenelement 19 abgedichtet. Die Formgebungsfläche 2 bildet aufgrund der Porosität des Füllmaterials 17 gleichzeitig eine Ansaugfläche.

Oberhalb des Formgebungswerkzeugs 1 ist ein Presswerkzeug 6 dargestellt, das eine zur Formgebungsfläche 2 komplementäre Pressfläche 7 aufweist. Im Presswerkzeug 6 sind ebenfalls Heizelemente 8 vorgesehen. Das Presswerkzeug 6 ist entlang von Führungen 9 relativ zum Formgebungswerkzeug 1 verfahrbar.

Figur 2 zeigt das Formgebungswerkzeug 1 und das Presswerkzeug 6 und dazwischen schematisch eine polymere thermoplastische Ablagefolie 10, die anschließend auf die Formgebungsfläche 2 des Formgebungswerkzeugs 1 aufgelegt wird. Das Presswerkzeug 6 wird in Richtung auf das Formgebungswerkzeug 1 verfahren und mit einer Presskraft F auf das Formgebungswerkzeug 1 gepresst. Diese Situation ist in Figur 3 dargestellt, wobei nunmehr die Heizelemente 3 und 8 nicht mehr eingezeichnet sind. Mit Hilfe der Heizelemente 3 und 8 werden die Formgebungsfläche 2 sowie die Pressfläche 7 erhitzt, wodurch gleichzeitig auch die Ablagefolie 10 erwärmt wird. In Folge der Presskraft F und der durch die Heizelemente 3 erzeugten Wärme formt sich die Ablagefolie 10 an die Formgebungsfläche 2 an.

Anschließend kühlen Presswerkzeug 6 und Formgebungswerkzeug 1 ab. Vor dem Abheben des Presswerkzeugs 6 wird mit Hilfe der in Figur 3 nicht dargestellten Vakuumpumpe 5 im Formgebungswerkzeug 1 ein Unterdruck erzeugt. Über die als Ansaugfläche fungierende Formgebungsfläche 2 wird somit die Ablagefolie 10 auf der Formgebungsfläche 2 fixiert. Der Unterdruck ist in Figur 3 mit den Unterhalb der Formgebungsfläche 2 angeordneten Pfeilen symbolisiert.

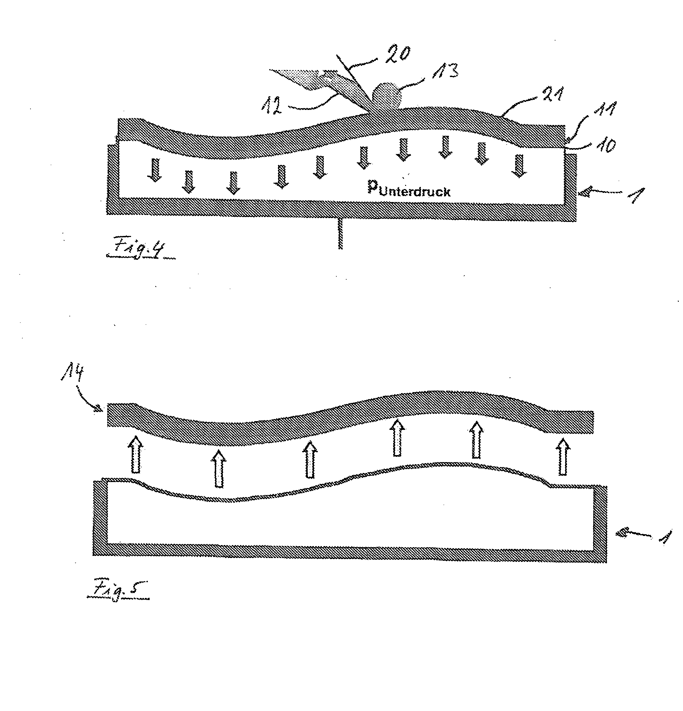

Nach dem Abheben des Presswerkzeugs 6 vom Formgebungswerkzeugs 1 kann die dem Formwerkzeug 1 abgewandte Ablagefläche 11 der Ablagefolie 10 mit faserverstärkten Polymerbändern 20 belegt werden. Fig. 4 zeigt einen Zustand, zu dem die Ablagefolie bereits mit einer Schicht 21 aus mehreren Lagen von Polymerbändern 20 belegt ist und gerade ein weiteres Polymerband 20 aufgebracht wird. Hierzu werden das Polymerband 20 sowie die Schicht 21 bereits abgelegter Bänder im Bereich der Kontaktbildung mit Laserstrahlung 12 bestrahlt und lokal aufgeschmolzen. Beim Ablegen wird das Polymerband 20 mittels einer Andruckrolle 13 auf die Schicht 21 aufgepresst.

Während dieses Prozesses besteht im Formgebungswerkzeug 1 weiterhin der durch die hier nicht dargestellte Vakuumpumpe 5 (siehe Fig. 1) erzeugte Unterdruck. Hierdurch ist gewährleistet, dass die Ablagefolie 10 auf der Formgebungsfläche 2 auch während der Bearbeitung und der Ablage der Erstlagenschicht sowie der Folgeschichten verbleibt. Die dabei erzeugte Haftkraft ist ausreichend, um den Eigenspannungen der abgelegten Polymerbänder 20 entgegenzuwirken.

Nachdem auf diese Weise mehrere Lagen der Polymerbänder 20 aufgetragen wurden und das fertige Bauteil 14 die gewünschte Dicke hat, wird der Unterdruck im Formgebungswerkzeug 1 abgebaut und das Bauteil 14, das nunmehr aus der Polymerbandschicht 21 sowie der Ablagefolie 10 besteht, abgehoben.

Anschließend kann das Bauteil 14 einer Endbearbeitung zugeführt werden. Die Ablagefolie 10 und die darauf abgelegten Polymerbändern 20 können aus dem gleichen Polymer bestehen oder aber auch aus unterschiedlichen Materalien. Des Weiteren ist es möglich, auf der Ablagefolie 10 Schichten aus unterschiedlichen Polymermaterialien aufzubringen.

### Bezugszeichenliste

- 1: Formgebungswerkzeug
- 2: Formgebungsfläche
- 3: Heizelemente
- 4: Vakuumleitung
- 5: Vakuumpumpe
- 6: Presswerkzeug
- 7: Pressfläche
- 8: Heizelement
- 9: Führung
- 10: Ablagefolie
- 11: Ablagefläche
- 12: Laserstrahlung
- 13: Andruckrolle
- 14: Bauteil
- 16: Unterdruckraum
- 17: Füllmaterial
- 18: Wand
- 19: Bodenelement
- 20: Polymerband
- 21: abgelegte Polymerbandschicht

## Patentansprüche

1. Verfahren zur Herstellung von Kunststoff enthaltenden Bauteilen, bei dem Polymerbänder (20) eines ersten Polymermaterials zumindest in einer ersten Polymerbandlage auf einer Ablagefläche (11) eines Ablageelements (10) abgelegt werden, wobei das Ablageelement (10) aus dem ersten oder einem zweiten Polymermaterial besteht und im Bauteil (14) verbleibt,
**dadurch gekennzeichnet, dass**
das Ablageelement (10) erwärmt und an einer Formgebungsfläche (2) eines Formgebungswerkzeugs (1) angeformt wird, wobei das erwärmte Ablageelement (10) mittels eines eine zur Formgebungsfläche (2) komplementäre Pressfläche (7) aufweisenden Presswerkzeugs (6) auf das Formgebungswerkzeug (1) aufgepresst wird.

2. Verfahren nach Anspruch 1, **dadurch gekennzeichnet, dass** das Ablageelement (10) während des Ablegens der Polymerbänder (20) mittels Unterdruck an mindestens einer luftdurchlässigen Ansaugfläche des Formgebungswerkzeugs (1) fixiert wird, wobei das Ablageelement (10) die mindestens eine Ansaugfläche vollständig oder nahezu vollständig abdeckt.

3. Verfahren nach Anspruch 1 oder 2, **dadurch gekennzeichnet, dass** das Ablageelement (10) zum Anformen mittels zumindest auch im Formgebungswerkzeug (1) angeordneter Heizelemente (8) erwärmt wird.

4. Verfahren nach einem der Ansprüche 1 bis 3, **dadurch gekennzeichnet, dass** ein faserverstärktes Ablageelement (10) verwendet wird.

5. Verfahren nach einem der Ansprüche 1 bis 4, **dadurch gekennzeichnet, dass** die die Erstlage bildenden Polymerbänder (20) bei der Ablage mit dem Ablageelement (10) verschweißt werden.

6. Verfahren nach Anspruch 4, **dadurch gekennzeichnet, dass** zur Verschweißung des jeweiligen Polymerbandes (20) mit dem Ablageelement (10) ein noch nicht abgelegtes Polymerbandstück sowie ein entsprechender Bereich des Ablageelements (10) unmittelbar vor der Kontaktbildung lokal aufgeschmolzen werden.

7. Vorrichtung zur Herstellung von Kunststoff enthaltenden Bauteilen, umfassend
ein Formgebungswerkzeug (1) mit einer Formgebungsfläche (2), wobei die Formgebungsfläche zumindest bereichsweise als luftdurchlässige Ansaugfläche ausgebildet ist,
Mittel (4, 5) zur Erzeugung eines Unterdrucks in einem von der Ansaugfläche begrenzten Unterdruckraum,
ein Presswerkzeug (6) mit einer zur Formgebungsfläche (2) komplementären Pressoberfläche (7), und
Mittel (9) zur gesteuerten Bewegung des Presswerkzeugs (6) relativ zum Formgebungswerkzeug (1);
**gekennzeichnet durch**
eine zum Ablegen eines Polymerbandes geeignete Andruckrolle.

8. Vorrichtung nach Anspruch 7, **dadurch gekennzeichnet, dass** im Formgebungswerkzeug (1) und/oder im Presswerkzeug (6) Heizmittel (3, 8) vorgesehen sind.

9. Vorrichtung nach Anspruch 7 oder 8, **dadurch gekennzeichnet, dass** das Formgebungswerkzeug (1) aus porösem Material gebildet ist, welches abgesehen von der Formgebungsfläche (2) und einer Absaugöffnung allseitig abgedichtet ist.

## Claims

1. Method for producing components containing plastic, in which polymer strips (20) of a first polymer material, at least in a first polymer strip layer, are deposited on a depositing surface (11) of a depositing element (10), the depositing element (10) consisting of the first or a second polymer material and remaining in the component (14),
**characterized in that**
the depositing element (10) is heated and is formed on a forming surface (2) of a forming tool (1), the heated depositing element (10) being pressed onto the forming tool (1) by means of a pressing tool (6) having a pressing surface (7) complementary to the forming surface (2).

2. Method according to Claim 1, **characterized in that** the depositing element (10), during depositing of the polymer strips (20), is secured by vacuum to at least one air-permeable suction surface of the forming tool (1), the depositing element (10) covering the at least one suction surface completely or almost completely.

3. Method according to Claim 1 or 2, **characterized in that** the depositing element (10) is heated for forming by means of heating elements (8) that are at least also arranged in the forming tool (1).

4. Method according to one of Claims 1 to 3, **characterized in that** a fibre-reinforced depositing element (10) is used.

5. Method according to one of Claims 1 to 4, **characterized in that** the polymer strips (20) forming the initial layer are welded during depositing with the depositing element (10).

6. Method according to Claim 4, **characterized in that**, for welding the respective polymer strip (20) to the depositing element (10), a not yet deposited piece of polymer strip and a corresponding region of the depositing element (10) are fused locally immediately before contact takes place.

7. Device for producing components containing plastic, comprising
a forming tool (1) with a forming surface (2), the forming surface being configured, in some areas at least, as an air-permeable suction surface,
means (4, 5) for producing a vacuum in a vacuum space delimited by the suction surface,
a pressing tool (6) having a pressing surface (7) complementary to the forming surface (2), and
means (9) for the controlled movement of the pressing tool (6) relative to the forming tool (1),
**characterized by**
a pressure roll suitable for depositing a polymer strip.

8. Device according to Claim 7, **characterized in that** heating means (3, 8) are provided in the forming tool (1) and/or in the pressing tool (6).

9. Device according to Claim 7 or 8, **characterized in that** the forming tool (1) is made from a porous material, which, apart from the forming surface (2) and an exhaust opening, is sealed on all sides.

## Revendications

1. Procédé pour fabriquer des éléments de construction contenant de la matière plastique, dans lequel on dépose des bandes de polymère (20) d'un premier matériau polymère au moins en une première couche de bande de polymère sur une face de dépôt (11) d'un élément de dépôt (10), dans lequel l'élément de dépôt (10) se compose du premier ou d'un deuxième matériau polymère et reste dans l'élément de construction (14), **caractérisé en ce que** l'on chauffe l'élément de dépôt (10) et on le façonne sur une face de formage (2) d'un outil de formage (1), dans lequel on presse l'élément de dépôt chauffé (10) sur l'outil de formage (1) au moyen d'un outil de pressage (6) présentant une face de pressage (7) complémentaire à la face de formage (2).

2. Procédé selon la revendication 1, **caractérisé en ce que** l'on fixe l'élément de dépôt (10) pendant le dépôt des bandes de polymère (20), au moyen d'une dépression, sur au moins une face d'aspiration perméable à l'air de l'outil de formage (1), dans lequel l'élément de dépôt (10) recouvre complètement ou presque complètement ladite au moins une face d'aspiration.

3. Procédé selon la revendication 1 ou 2, **caractérisé en ce que** pour façonner on chauffe l'élément de dépôt (10) au moyen des éléments chauffants (8) disposés au moins également dans l'outil de formage (1).

4. Procédé selon l'une quelconque des revendications 1 à 3, **caractérisé en ce que** l'on utilise un élément de dépôt (10) renforcé par des fibres.

5. Procédé selon l'une quelconque des revendications 1 à 4, **caractérisé en ce que** l'on soude les bandes de polymère (20) formant la première couche à l'élément de dépôt (10) lors du dépôt.

6. Procédé selon la revendication 4, **caractérisé en ce que**, pour le soudage de la bande de polymère respective (20) avec l'élément de dépôt (10), on fond localement, immédiatement avant la formation du contact, un morceau de bande de polymère pas encore déposé ainsi qu'une zone correspondante de l'élément de dépôt (10).

7. Dispositif pour fabriquer des éléments de construction contenant de la matière plastique, comprenant:
- un outil de formage (1) avec une face de formage (2), dans lequel la face de formage est constituée au moins localement par une face d'aspiration perméable à l'air,
- des moyens (4, 5) pour produire une dépression dans une chambre de dépression limitée par la face d'aspiration,
- un outil de pressage (6) avec une surface de pressage (7) complémentaire à la face de formage (2),
et
- des moyens (9) pour le déplacement contrôlé de l'outil de pressage (6) par rapport à l'outil de formage (1),
**caractérisé par** un rouleau de pression convenant pour le dépôt d'une bande de polymère.

8. Dispositif selon la revendication 7, **caractérisé en ce qu'**il est prévu des moyens chauffants (3, 8) dans l'outil de formage (1) et/ou dans l'outil de pressage (6).

9. Dispositif selon la revendication 7 ou 8, **caractérisé en ce que** l'outil de formage (1) est réalisé en un matériau poreux, qui est colmaté de tous les côtés sauf dans la face de formage (2) et une ouverture d'aspiration.
